Europäisches Patentamt

European Patent Office

Office européen des brevets

(19)

(11) Publication number: **0 018 092**
**A1**

(12) **EUROPEAN PATENT APPLICATION**

(21) Application number: **80300870.5**

(22) Date of filing: **20.03.80**

(51) Int. Cl.³: **G 01 N 1/00, G 01 N 35/00**

(30) Priority: **21.03.79 GB 7909975**

(43) Date of publication of application: **29.10.80**
**Bulletin 80/22**

(84) Designated Contracting States: **AT BE CH DE FR GB IT LU NL SE**

(71) Applicant: **Lilly Industries Limited, Lilly House Hanover House, London W1R 0PA (GB)**

(72) Inventor: **Papworth, Stephen Thomas, 40, Durnsford Avenue, Fleet, Hampshire (GB)**

(74) Representative: **McVey, Kenneth William Henry, Erl Wood Manor, Windlesham Surrey, GU20 6PH (GB)**

(54) **Apparatus and method for obtaining fluid samples.**

(57) Apparatus for obtaining fluid samples in batches of six at a time on a selectively pre-set number of batch-sampling occasions at selectively pre-set intervals. The samples are of selectively pre-set volume obtained for dissolution testing from six pots (90) in which pharmaceutical tablet preparations (95) are being dissolved, the solution samples being discharged into cup-shaped containers (54) mounted on a turntable (53) so as to be readily removed for subsequent analysis. The apparatus comprises a sampling device (45), a peristaltic pump (40), and a controller (70). The sampling device (45) includes an indexing mechanism to support the turntable (53) and index it selectively either six steps each cycle or six steps on each odd-numbered cycle and eight steps on each even-numbered cycle; and also includes a bracket (60) pivotally mounted on a horizontal axis above the turntable (53) to swing between a first position above six of the turntable-supported containers and a second position above a waste gutter or receptacle, the bracket (60) providing or supporting, in equiangularly-spaced arcuate array, the discharge ends of six flexible conduits (65) leading from the pots (90) via said pump (40). The controller (70) includes a preprogrammed microprocessor circuit and manually-operable setting devices for selectively pre-setting the number of said batch-sampling occasions, the said intervals, the said volume and the number of said indexing steps in each cycle and for providing an appropriate sequence of operations by the pump (40) and movements of the bracket (60) and the turntable (53).

0018092

# IMPROVEMENTS IN OR RELATING TO FLUID SAMPLING

This invention relates to fluid sampling, e.g. sampling solutions of pharmaceutical tablet or capsule preparations for dissolution testing.

The British Pharmacopoeia and the United States Pharmacopoeia set out the broad requirements for the dissolution testing of such pharmaceutical preparations. These requirements render it necessary to perform sampling operations repeatedly on each test solution, i.e. at appropriate time intervals over an extended time period. Where just one single test solution is concerned, the time intervals can be measured by a simple timing mechanism and the sampling operation can be readily undertaken by pipette. However, where several test solutions are to be sampled simultaneously, manual sampling by pipette is physically impossible for absolute simultaneity, and even small time differences as between the supposedly simultaneously-taken samples can, upon analysis of the samples, lead to inaccurate analysis results. Furthermore, the use of pipettes for extracting the sample of fluid can lead to residual droplets from one sampling operation being transferred to the sample extracted by the next sampling operation. Thus inaccurate test results can arise even if the pipette is washed out between successive sampling operations (since droplets of the washing fluid would merely replace the sample droplets).

For specific use in dissolution testing, apparatus has been proposed which combines in one unit means for both sampling and immediate analysis. In use this apparatus has a continuous conduit path for fluid extending from the test solution to and through a spectrometer analysis device. Such apparatus is very expensive and cannot readily be used to obtain separate fluid samples that may be treated (e.g. by mixture with air or specified reagents) prior to analysis by the spectrometer device.

To overcome the above and/or other drawbacks of prior art arrangements it is therefore desirable to provide apparatus for use in automatically sampling several fluids simultaneously, the sampling being performed at predetermined time intervals over a predetermined time period, and the individual samples being retained in respective containers (e.g. for subsequent treatment and/or for analysis).

According to a first aspect of this invention there is provided apparatus for use in fluid sampling, said apparatus including:

(a)     sampling means comprising:

a carrier having a plurality of locations for open-topped containers in a regular array;

means to index the carrier in steps to present a predetermined number of said locations at a common charging station;

a bracket providing or supporting a plurality of conduit outlets in a corresponding array, each outlet being for discharge of an associated fluid sample and the number of said outlets being equal to said predetermined number of locations;

means to move the bracket between a first position, spaced above the carrier at said charging station, in which all said outlets can simultaneously discharge fluid from said conduits into respective carrier-supported open-topped containers at said common charging station and a second position in which all said outlets can simultaneously discharge fluid from said conduits into a waste receptacle;

(b)     pump means to effect fluid flow through said conduits simultaneously from a plurality of fluids to be sampled; and

(c)     control means to be operatively connected to said sampling means and said pump means for automatically effecting the following cycle or sequence of operations a predetermined number of times:

(i)     after a first predetermined time interval, actuating the pump means for a first predetermined time period with the bracket in said second position,

(ii) actuating the bracket moving means to move the bracket to said first position,

(iii) actuating the pump for a second predetermined time period to charge simultaneously, via said conduits, containers at the charging station with respective fluid samples, and

(iv) actuating the bracket moving means to move the bracket to said second position and, before after or simultaneously, actuating the indexing means to index the carrier by a predetermined number of said steps to present afresh said predetermined number of locations at the common charging station.

Preferably the bracket of said sampling means is pivotally mounted for arcuate movement by said bracket moving means about a horizontal pivot axis disposed above the carrier of said sampling means.

Preferably the carrier of said sampling means comprises a turntable step-wise rotatable by said indexing means about a vertical axis, said container locations being equi-angularly spaced in an arcuate array centred on said vertical axis and said conduit outlets on the bracket of said sampling means being equi-angularly spaced in an arcuate array of like radius of curvature. The carrier of said sampling means may be removably mounted on the indexing means.

Advantageously, with sampling means in accordance with the preceding paragraph, the number of said conduit outlets (which equals the predetermined number of said locations at the common charging station) is six.

Preferably the control means comprises an indexing-steps setting device whereby the control means is selectively settable either to a first indexing condition in which said predetermined number of steps is the same for each repeated sequence of operations or to a second indexing condition in which said predetermined number of steps has a first value for each (2N-1) of said cycles and a second value for each 2N of said cycles, N being an integer. Advantageously said first value is six and said second value is eight.

Preferably the control means comprises a program selector device whereby the control means is settable to provide any one of a predetermined number of timing programs, each such timing program providing a specific combination of said first predetermined time interval, and of said predetermined number of times that the cycle is performed.

Advantageously each such timing program provides a value for said first predetermined time interval specific to each said cycle.

Preferably the control means comprises a sample size setting device to set the values of said first and second predetermined time periods, e.g. to be equal in each said cycle or to be unequal in each said cycle. Advantageously said first predetermined time period has a constant value for all said cycles and/or said second predetermined time period has a constant value for all said cycles.

Conveniently said control means includes a microprocessor circuit pre-programmed with said timing programs, the microprocessor being connected to a quartz-crystal timing pulse signal generator and to said program selector device. The microprocessor may further be connected to said indexing-steps setting device (where provided) and/or to said sample size setting device (where provided)

Preferably the pump means comprises a peristaltic pump to operate on said conduits.

According to a second aspect of this invention there is provided sampling means for apparatus according to said first aspect of this invention, said sampling means being in accordance with sub-paragraph (a) above.

According to a third aspect of this invention there is

-5-

provided control means for apparatus according to said first aspect of this invention, said control means being in accordance with sub-paragraph (c) above.

According to a fourth aspect of this invention there is provided a method of dissolution testing of pharmaceutical preparations, wherein a plurality of such preparations in solution are simultaneously subjected to a sampling operation by apparatus according to said first aspect of this invention, said operation is performed repeatedly at predetermined time intervals over a predetermined period of time, and wherein the open-topped containers containing the fluid samples are removed and the fluid samples therein subsequently analysed (e.g. after treatment).

By way of example, embodiments of this invention will now be described with reference to the accompanying drawings of which:

Figure 1 is a schematic diagram of apparatus according to this invention in use for dissolution testing of pharmaceutical tablet preparations,

Figure 2 is a diagramatic partly-sectioned side elevation of the sampling device 45 when viewed in the direction of arrow II of Fig 1,

Figure 3 is a circuit diagram showing electrical and electronic components of inter alia the sampling device 45,

Figure 4 shows (Figures 4A and 4B conjoined) a circuit diagram of a microprocessor circuit of the controller 70,

Figure 5 shows a circuit diagram of a decoding circuit of the controller 70,

Figure 6 is a timing diagram (not to scale) representing a sequence of operations where the fluid samples are each to have a relatively large volume, and

Figure 7 is a timing diagram (not to scale) representing a sequence of operations where the fluid samples are each to have a relatively small volume.

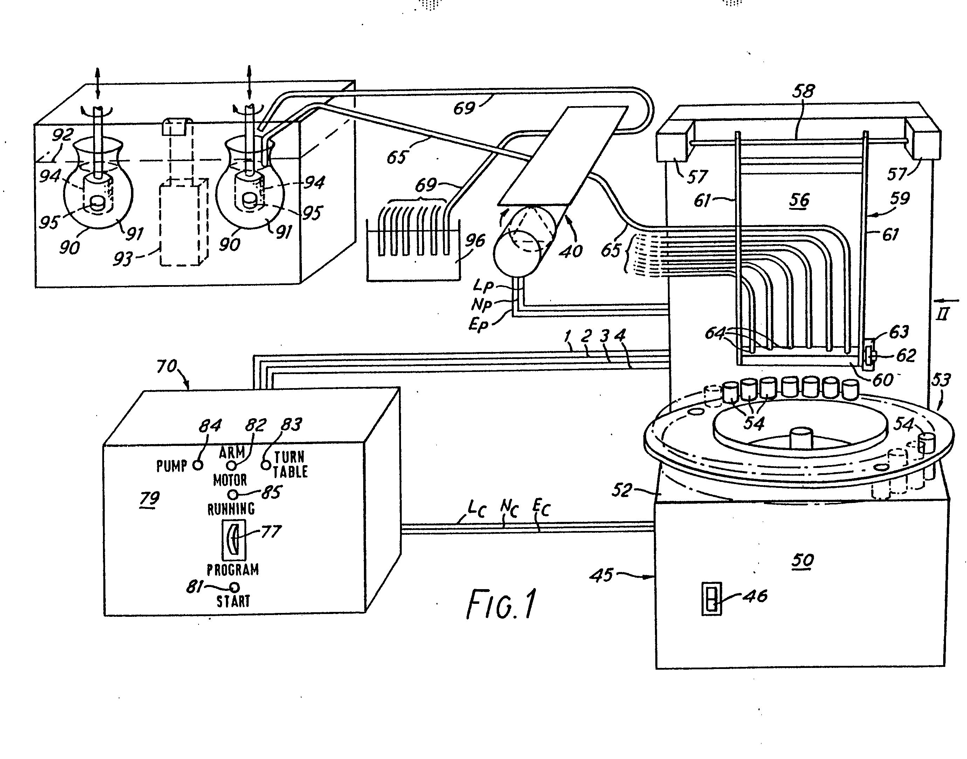

The apparatus illustrated in Fig 1 is for obtaining fluid samples in batches of six at a time, a selectively pre-set number of times, the batches being obtained at selectively pre-set intervals of time. The samples are of selectively pre-set volume and obtained, for dissolution testing or analysis (e.g. in a spectrophotometer), from six pots or flasks 90 (only two being shown in Fig 1) in which pharmaceutical tablet preparations 95 are being dissolved. The apparatus comprises a peristaltic pump 40 to withdraw fluid from each of the pots and pass it via an associated one of six flexible conduits 65 (only one being wholly shown in Fig 1) to a sampling device 45, operation of the pump and sampling device being controlled by a controller 70.

The sampling device 45 (as illustrated in Figs 1, 2 and 3) comprises a housing 50 of generally L-shape. A motor-driven rotary indexing mechanism 51, mounted within the lower horizontal limb 52 of the housing, has a vertical output shaft 49 projecting through, or in alignment with, an aperture 48 in the upper surface of limb 52. A turntable 53, removably mounted on the output shaft of the indexing mechanism to overlie said upper surface, is provided with compartments or holes each to locate a cup or similar open-topped container 54 for a fluid sample. The arrangement of the compartments or holes is such that the containers 54 are located in a single arcuate line adjacent the periphery of the turntable 53 and in equi-angularly spaced relation to one another, the arc being centred on the axis of the vertical output shaft of the indexing mechanism 51. Conveniently, forty such containers can be so located on the turntable 53. The upper surface of housing limb 52 also provides a platform for a removable waste gutter or receptacle 55 disposed between the turntable 53 and the vertical limb 56 of the housing.

At its upper end, the vertical limb 56 of the housing is provided with two laterally spaced, forwardly directed, fixed arms 57 that overlie the housing's horizontal limb 52. A pivot rod 58 extends horizontally between the two fixed arms 57 and a swinging frame 59 is pivotally mounted on the pivot rod 58 for arcuate movement in a vertical plane. The frame 59, which is immovable laterally of rod 58, comprises a lower horizontal bracket 60 connected to and between the lower ends of two laterally spaced limbs 61 that are mounted rotatably on the horizontal pivot rod 58 by their upper ends. The bracket 60 is at a level slightly above the top of the containers 54 on turntable 53 and is provided with six vertical holes 64 therethrough. These six holes are disposed in a single arcuate line having substantially the same radius of curvature, and sense, as the turntable-located containers 54, the six holes 64 being equi-angularly spaced at substantially the same angular spacing as that between the turntable-located containers 53. These six holes provide or support the ends of flexible conduits 65 from the six solutions to be sampled and constitute the conduit outlets. One of the limbs 61 of frame 59 is pivotally connected by its lower end to one end of a lever 62 extending inwardly of the housing's vertical limb 56 through a vertical slot 63. The other end of lever 62, within the housing, is connected eccentrically to the output shaft 47 of an electric motor (herein sometimes referred to as the "arm motor" or "bracket motor") 66.

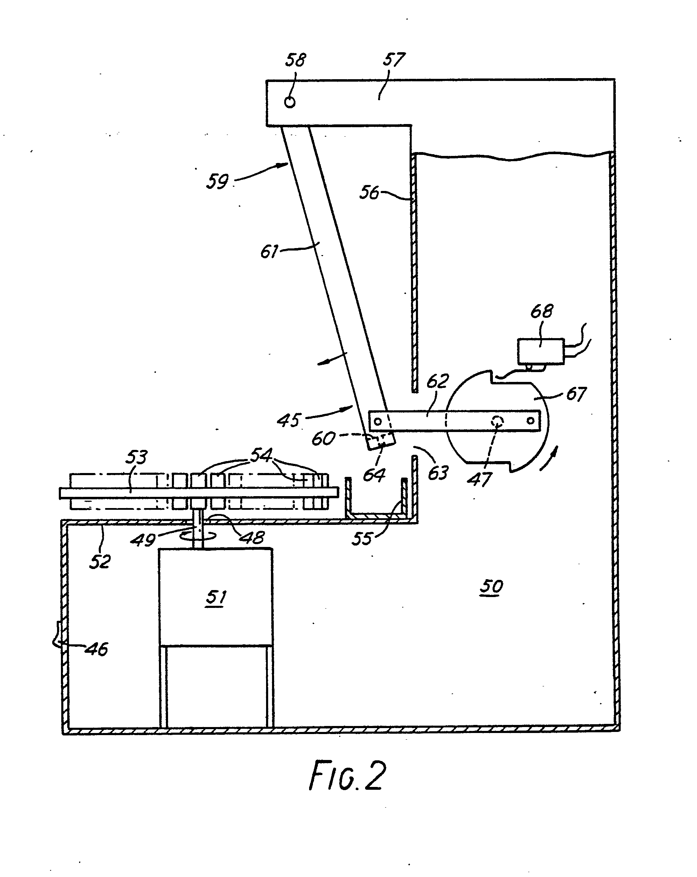

A cam 67 mounted on the output shaft of the arm motor 66 co-operates with a micro-switch 68 such that, for a first half-revolution of the arm motor 66, the lever 62 swings the bracket 60 of frame 59 away from the housing's vertical limb 56 and positions the six conduit outlets 64 above six of the turntable-supported containers 54, and such that, for the second half-revolution of the arm motor 66, the lever 62 swings the bracket 60 of frame 59 towards the housing's vertical limb 56 and positions the six conduit outlets 64 above the waste gutter or receptacle 55 (see Fig 2). Thus in the first bracket position fluid from the six conduits 65 can be simultaneously discharged into respective open-topped containers 54 below the bracket, i.e. at a charging station, and in the second bracket position (illustrated in Fig 2), fluid from the six conduits 65 can be simultaneously discharged into the waste gutter or receptacle 55.

Fluid flow through the six flexible conduits 65 is effected by the pump 40 which is a motor-driven, variable speed, multi-channel peristaltic pump that provides an external squeezing action on the flexible conduits 65. In sampling for dissolution testing the same pump 40 may simultaneously control flow through a further six conduits 69 (only one being wholly shown in Fig 1) supplying replenishment solvent from a container 96 to the receptacles 90 from which the solution samples are being taken.

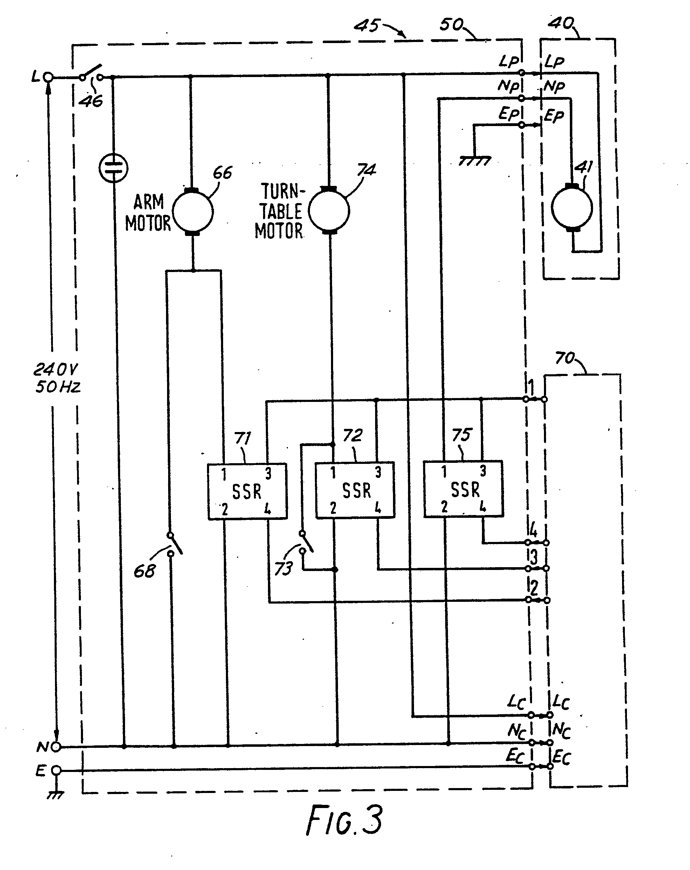

Figure 3 shows the electrical components within the housing 50 of the sampling means and their connection to the motor 41 of the peristaltic pump 40 via a three-way plug-and-socket coupling $L_p$, $N_p$ and $E_p$, and to the controller 70 via a three-way plug-and-socket coupling $L_c$, $N_c$ and $E_c$ and a four-way plug-and-socket coupling 1, 2, 3, 4. With an ON/OFF switch 46 of the sampling means closed, an input signal at 2 from the controller 70 actuates relay 71 and switch 68 to energise the arm motor 66 thus to effect one half revolution, an input signal at 3 from the control device 70 actuates relay 72 and switch 73 to energise the "turntable" motor 74 of the indexing mechanism 51 whereby the motor 74 effects one complete revolution and a consequential one-step or one-location indexing of the turntable 53, and an input signal at 4 from the control device 70 actuates relay 75 to energise the pump motor 41.

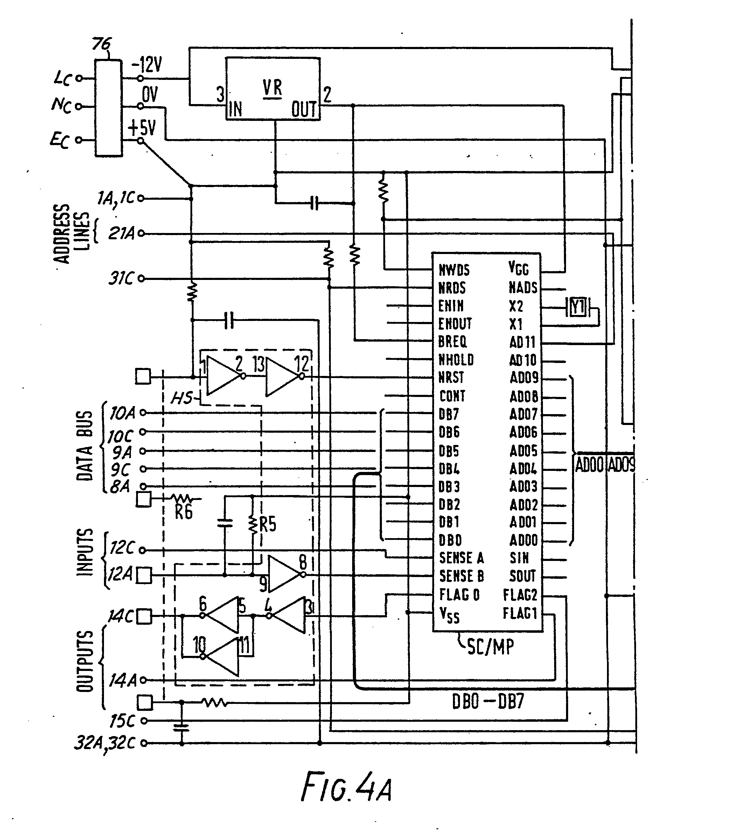

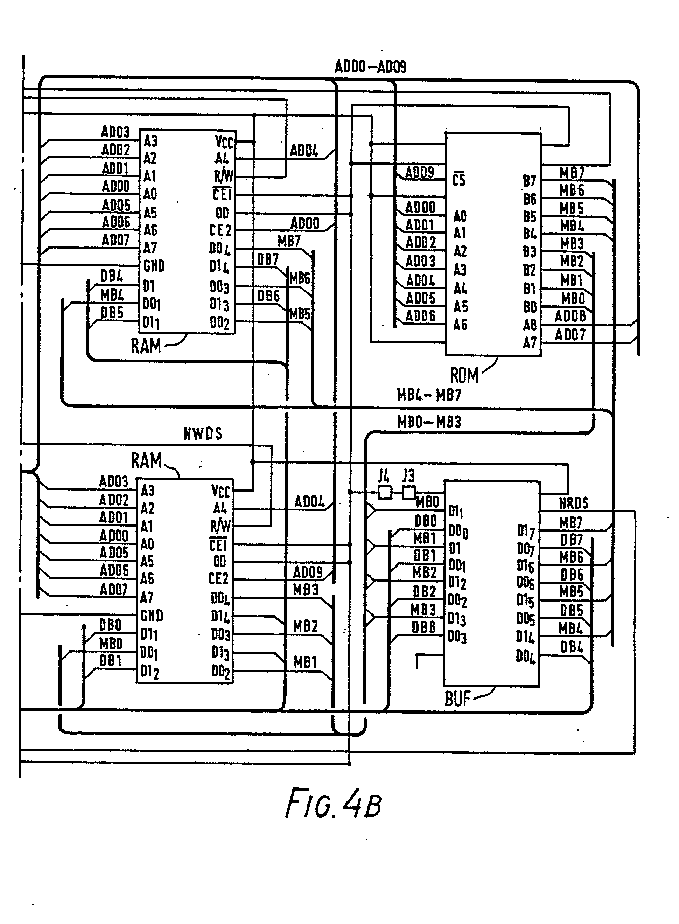

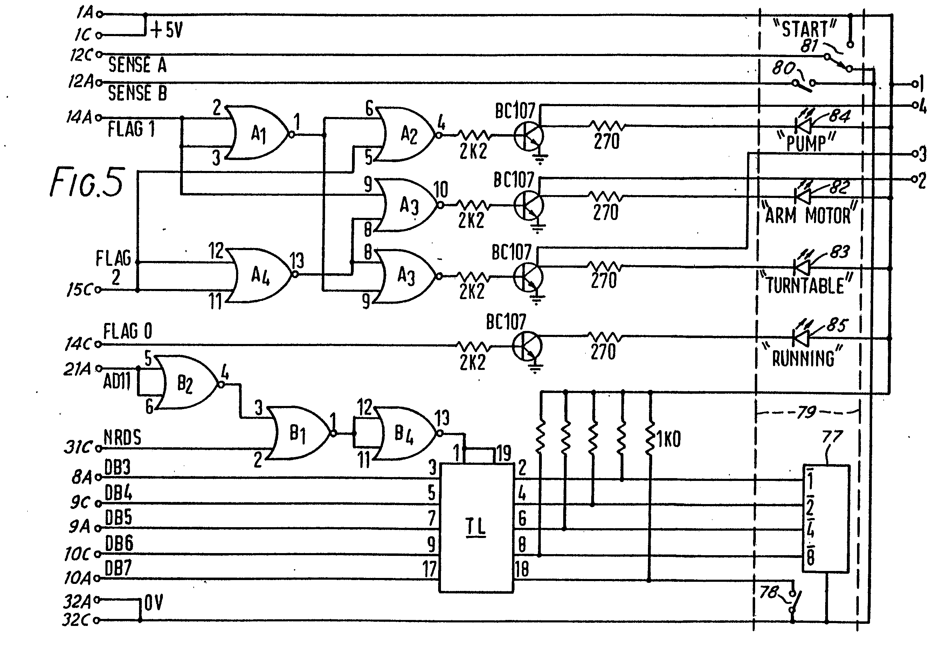

The controller 70, shown in greater detail in Figs 4 and 5, comprises a transformer-rectifier 76 having mains voltage input from coupling $L_c$, $N_c$ and $E_c$ to provide D.C. output voltages of -12 volts and +5 volts, as well as an earth (0 volts), to a microprocessor circuit (Fig 4A and 4B conjoined) connected to a decoding circuit (Fig 5). The microprocessor circuit includes a microprocessor chip SC/MP (Type ISP-8A/500D), two read/write memories RAM (Type MM2101N), a read-only memory ROM (Type MM5214 or MM 5244), an 8-bit buffer BUF (Type DM81LS95) between the outputs of the memory devices and the SC/MP chip inputs, a Hex-Schmitt trigger HS (Type DM7414N) to provide the level conversions for serial input and output to and from the microprocessor chip SC/MP, a quartz-crystal oscillator Yl (1000 MHz) connected to the microprocessor chip SC/MP to provide timing pulse signals thereto, and a voltage regulator VR (Type LM320MP-12) to provide a supply of -7 volts to terminals 5 and 40 (BREQ and $V_{GG}$) of the microprocessor chip SC/MP, the components being interconnected as shown in Fig 4. The microprocessor circuit and the decoding circuit are interconnected via connections referenced 1A, 1C; 8A, 9A,9C, 10A, 10C; 12A, 12C; 14A, 14C, 15C; 21A; 31C; and 32A, 32C. Connections 1A, 1C are at +5 volts, connections 32A, 32C are earthed (0 volts), connections 8A, 9A, 9C, 10A and 10C are the input data bus lines to the microprocessor chip SC/MP from the decoding circuit, connections 12A and 12C are the input lines to terminal SENSE B and terminal SENSE A of the microprocessor chip (connection 12A being coupled via resistor R5 to the +5 volts supply line), connections 14A, 14C and 15C are the output lines from terminals FLAG 1, FLAG 0 and FLAG 2 respectively, connection 21A is the address line AD11 of the microprocessor chip, and connection 31c is the negative read data strobe line to terminal NRDS of the microprocessor chip. Optionally the connection J3 to the buffer BUF may be connected (e.g. selectively) to the address line AD11 of chip SC/MP instead of being connected to earth via connection J4.

The decoding circuit of Fig 5 includes two NOR gate integrated circuits $A_1-A_4$ and $B_1-B_4$ (Type 74LS02) connected as shown in Fig 5 with NOR gate $B_4$ connected to a tristate latch TL (Type 81LS02) controlling the data input to the microprocessor chip SC/MP. The data input is determined by two setting devices 77, 78 connected to the tristate latch TL. Setting device 77 is a ten-position rotary switch, having the external form of a numbered thumbwheel, mounted on a front panel 79 of the control device housing adjacent a legend "PROGRAM". Setting device 78 is a two-position electrical switch mounted either on the front panel 79 or, as is preferred, on a rear panel (not shown) of the control device housing. Another two-position electrical switch 80 is mounted either on front panel 79 or, as is preferred, on the rear panel to provide a potential at SENSE B of the microprocessor chip

-10-

selectively either of zero volts (by connecting to earth via connections 32A, 32C) or of +5 volts (by pulling connection 12A high via resistor R5 if switch 80 is left open). The front panel 79 also has mounted thereon, adjacent a legend "START", a momentary-contact electrical switch 81 to connect SENSE A of the microprocessor chip selectively to earth (connections 32A, 32C), or to the +5 volts supply (connections 1A, 1C). In addition, four light-emitting diodes 82, 83, 84 and 85 are mounted on the front panel 79 adjacent respective legends "ARM MOTOR", "TURNTABLE", "PUMP and "RUNNING". The light-emitting diode 85 is controlled by the output signal at connection 14C from terminal FLAG 0 of the microprocessor chip, and the light-emitting diodes 82, 83 and 84 are controlled respectively by the outputs of NOR gates $A_3$, $B_3$ and $A_2$. Said NOR-gates also control the output signals to respectively 2, 3 and 4 of the four-way coupling of controller 70 to the sampling device 45, such control being effected as follows:

(a)    when the signal in to each of the two connections 14A and 15C is high, a one-second output pulse signal is supplied via 3 and relay 72 (in conjunction with switch 73) to actuate the turntable motor 74 for one revolution;

(b)    when the signal in to connection 14A is high and in to connection 15C is low, a one-second output pulse signal is supplied via 2 and relay 71 (in conjunction with switch 68) to actuate arm motor 66 for half of one revolution;

(c)    when the signal in to connection 14A is low and in to connection 15C is high, a continuous output signal is supplied via 4 and relay 75 to actuate the pump motor 41; and

(d)    when the signal in to each of the two connections 14A and 15C is low, no output is provided and a delay occurs.

The microprocessor circuit is pre-programmed with several timing programs, each program being selected in accordance with the operational state or setting of the switches 77, 78 and 80 to provide the appropriate output signals at 2, 3 and 4 at the appropriate times or after appropriate time intervals. (The general form of the timing programs is explained below inter alia with reference to Figs

-11-

6 and 7). The ten-position thumbwheel switch 77 sets the times at which samples are to be taken, e.g. the sample times set out in Table I below. The two-state switch 78 is used to set the volume size of each sample by governing the running times of the pump motor 41, i.e. the signal duration to 4. For example, with pump 40 set to deliver fluid at a rate of 10 ml/min, volumetric discharges of 10 ml and 4 ml can be achieved with pump running times of respectively 60 secs and 24 secs. The two-state switch 80 governs the number of pulses supplied in each cycle to 3, i.e. to the motor 74 of the indexing mechanism 51. Each one-second pulse effects one revolution of motor 74 that is converted by the step-down gear transmission of the indexing mechanism to provide a one-step movement of the turntable. With switch 80 in one state (herein called the "6666" state) the circuits provide six pulses, effecting six indexing steps of the turntable 53, in each and every cycle, whereas with switch 80 in the other state (herein called the "6868" state) the circuits provide six pulses, and six resultant indexing steps, in each odd-numbered cycle and provide eight pulses, and eight resultant indexing steps, in each even-numbered cycle.

To set up the apparatus such as to obtain samples for dissolution testing of pharmaceutical tablets, the sampling device 45, pump 40 and controller 70 are electrically connected to one another as indicated above, the sampling device 45 supporting a turntable 53 with sufficient empty sample cups 54 for several sampling cycles. Six pots or flasks 90 are each filled with a specified volume (e.g. 1 litre) of solvent 91 and placed in a water bath 92 maintained at a specified temperature by a heater and thermostat arrangement 93 (See Fig 1). One tablet 95, the dissolution of which is to be tested, is placed in each of six wire-mesh baskets 94 disposed respectively above the pots 90, the baskets 94 being movable vertically to immerse the tablets into the solvent 91 in the six pots 90 and being also rotatable or oscillatable to agitate the tablet 95 therein. The six flexible conduits 65 are connected to the bracket holes constituting the conduit outlets 64 and their opposite ends are inserted into the solvent 91 in the respective six pots 90, the conduits (intermediate their ends) being passed over or around the operative mechanism of the peristaltic pump 40. The further six conduits 69 are connected between the six pots 90 and a common container 96 of the solvent (disposed externally of the bath 92) such that as six sample solutions are withdrawn from the pots 90 by the pump 40, the latter simultaneously feeds each of the six pots with an equal volume of solvent, as a replenishment, from container 96. Thus the specified volume of fluid in each pot 90 remains constant throughout. The length of each of the conduits 65 is kept as short as possible and, in any event, provides a volume no greater than 10 ml.

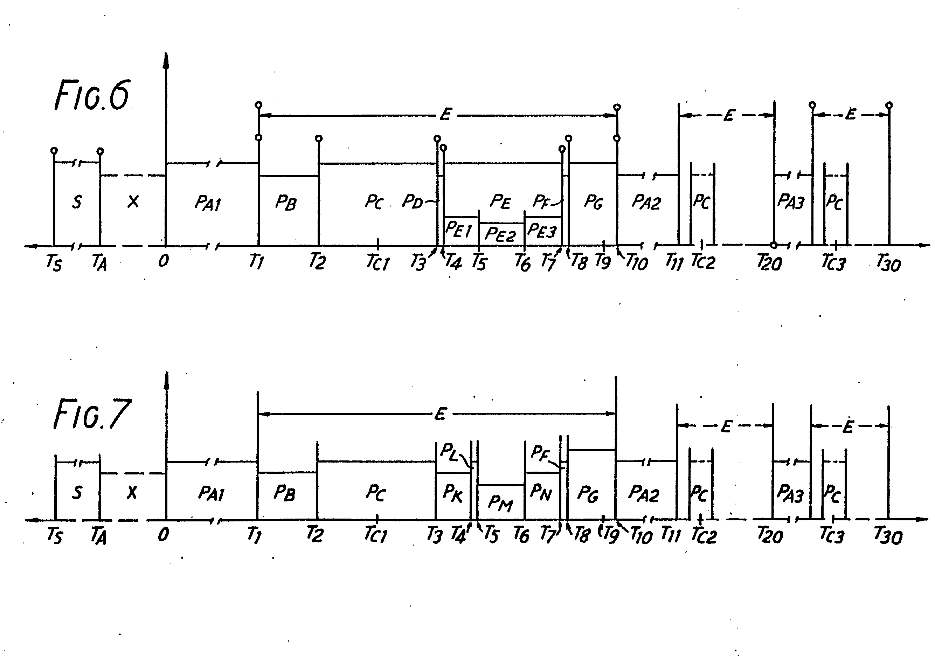

Switch 46 on the sampling device 50 is switched ON, and the controller's switches 77, 78 and 80 are set to provide the program, sample size and indexing arrangement required. With switch 80 in the "6868" state, two empty sample cups 54 will be left after every twelve samples have been taken (thereby allowing the operator, at the conclusion of sampling, to fill these empty cups with a standard or reference solution for use in subsequent analysis). The bracket 60 is moved manually to its said second position in which the conduit outlets 64 are above the waste gutter or receptacle 55, and the "START" button provided by momentary-contact switch 81 is depressed. This initiates operation of the pump motor 41 which, under the control of the program, runs for the period S (see Figs 6 and 7), conveniently 1½ minutes, so as to prime the conduits 65 with fluid from the pots 90 and replenish the pots with solvent from container 96 via the conduits 69. Simultaneously the light-emitting diodes 85 and 84 associated with the legends "RUNNING" and "PUMP" will be on to signify visually that the controller is operational and that the pump is on.

At the end of time period S, i.e. when the conduits 65 are primed, the pump motor stops automatically and the light-emitting diodes 84 and 85 both go off. The operator then lowers the six wire-mesh baskets 94, (each containing the tablet to be dissolved) into the solvent 91 and starts rotation or oscillation of the baskets, simultaneously again depressing the "START" button 81 of the controller 70. The time period X in Figs 6 and 7 denotes the varying time interval in which these manual operations are performed. This second depression of "START" button 81 again turns on the "RUNNING" light-emitting diode 85 and commences the automatic sampling procedures determined by the selected program, such automatic operation being unaffected by any subsequent accidental operation of the "START" button 81 or of the switches 77, 78 or 80 before completion of all sampling cycles.

The following explanation of the programmed operational sequence assumes that switch 78 has been set to provide for large volume samples of 10 ml (see Fig 6). Initially the program provides a first delay period $P_{A1}$ terminating at time $T_1$ during which nothing further happens. At time $T_1$ a time sequence of operations terminating at time $T_{10}$ commences, which sequence is repeated with the same duration in each subsequent cycle. From time $T_1$ to time $T_2$ (period $P_B$), an additional delay is provided (e.g. 30 secs) until, at time $T_2$ the pump is operated for the period $P_C$ (e.g. 60 secs) to draw a sample solution into each of the six conduits 65 and expel a corresponding volume of fluid from each conduit into the waste gutter or receptacle 55. It will be apparent that half the sample taken into each conduit 65 will be taken immediately before time $T_{C1}$ and half immediately after time $T_{C1}$ where time $T_{C1}$ is mid-way between times $T_2$ and $T_3$ such that $T_{C1} = \frac{1}{2}(T_3 + T_2)$. Time $T_{C1}$ is arranged to correspond to the first sampling time set out in Table I for the program selected by the setting of rotary thumbwheel switch 77. At time $T_3$ the pump motor is stopped and the arm motor is operated so that during the period $P_D$ (e.g. 3 secs) the bracket 60 and the conduits 64 are brought pivotally from the said second (or waste) position to said first position in which the six conduit outlets 64 overlie the first six sample cups 54. At time $T_4$ the period $T_E$ commences during which the pump motor 41 is again operated to discharge into these six cups 54 the samples of fluid drawn into the conduits during period $P_C$. The period $T_E$ (from time $T_4$ to time $T_7$) is for example 60 secs and, where switch 78 has been set to provide for samples of 10 ml volume, the pump 67 is run for the whole of this period. Thus the fluid sample discharged into the sample cups 54 during period $P_E$ is composed of the one-half sample fluid ingested into the conduits 65 (during the period $P_C$) immediately before time $T_{C1}$ and the one-half sample fluid ingested into the conduits 65 immediately after the time $T_{C1}$. At time $T_7$ the pump motor 41 stops and the arm motor 66 starts to run (period $P_F$) to return pivotally the bracket 60 to the "waste" position. At the end of period $P_F$ (e.g. 3 secs after $T_7$) and at time $T_8$ the period $P_G$ commences during which turntable motor 74 is actuated such that, via the indexing mechanism 51, the turntable 53 is moved six steps (time $T_8$ to $T_9$) during this first cycle. The time allowed for each step is for example 3 secs and the period $P_G$ is for example 24 secs to allow for eight such steps to be effected, e.g. on even-numbered cycles when switch 80 is in the "6868" state, the two additional indexing steps occurring between times $T_9$ and $T_{10}$. At time $T_{10}$ (i.e. at the end of period $P_G$) the first cycle of operations is concluded and the second cycle commences.

The second and each subsequent cycle of operations is precisely the same as the first in sequence and periods $P_B$, $P_C$, $P_D$, $P_E$, $P_F$, and $P_G$ are each of the same duration. The only difference is that the first delay period (referenced $P_{A2}$ for the second cycle) differs from period $P_{A1}$ to take account of the elapsed time between $T_1$ and $T_{10}$ (i.e. the period E, composed of periods $P_B$, $P_C$, $P_D$, $P_E$, $P_F$, plus $P_G$, which transpires in every cycle and during which the above-mentioned operations are repeated) and to take account of any differences in the sampling times (denoted, for the first and second cycles, by $T_{C1}$ and $T_{C2}$). With the exemplary time durations given above it will be seen that period E has a duration of 3 minutes and periods $P_B$ and $P_C$ are respectively 30 secs. and 60 secs. Therefore with for example program "O" of Table I selected by switch 77, times $T_{C1}$ and $T_{C2}$ are respectively 5 minutes and 10 minutes whereby periods $P_{A1}$ and $P_{A2}$ must be respectively 4 minutes and 2 minutes.

If, on the other hand, the switch 78 is set to provide for small volume samples of for example 4 ml, the time periods are arranged such that the ingestion pump period $P_C$ is extended and the operation of the arm motor is transferred to occur within the delay period $P_{E1}$ (compare Figures 6 and 7). In other words, the time periods $P_D$ and $P_E$ from time $T_3$ to time $T_7$ are replaced by time periods $P_K$, $P_L$, $P_M$, and $P_N$, (for example of 18 secs, 3 secs, 24 secs and 18 secs respectively), period $P_K$ providing an additional run for the pump to waste, period $P_L$ providing for arm movement from the waste position to the cup filling position, period $P_M$ providing a run period for the pump motor to effect discharge of fluid samples into the six cups 54, and period $P_N$ providing a delay (before commencement of the period $P_F$ in which the arm is returned to the waste position). Thus, as with a 10 ml sample volume, the 4 ml samples discharged into the cups 54 during period $P_M$ each consist of one half of the fluid ingested into a conduit 65 immediately before time $T_{C1}$ and one half of the fluid ingested into that conduit 65 immediately after time $T_{C1}$.

It will be appreciated that, in every case (i.e. for each cycle of whatever program or sample volume), the period E is the same, e.g. 3 minutes. Furthermore it will be appreciated that the return movement of frame 59 to the waste position effected during period $P_F$ may be performed after or during the period $P_G$ instead of before the period $P_G$ as illustrated in Figs 6 and 7.

It will be apparent from the circuit of Fig 5 that light-emitting diode 82 is on whenever the arm motor 66 is operating, light-emitting diode 83 is on whenever the turntable indexing motor 74 is operating, and that light-emitting diode 84 is on whenever the pump motor 41 is operating.

A program for effecting the above-described alternative sequences (with period $P_F$ preceding period $P_G$), as well as for providing an audible alarm signal to a loudspeaker or buzzer (not shown) provided in the controller 70, is set out in generalised form below. This program utilises the three pointer registers provided by the microprocessor circuit and stores the appropriate data corresponding to Table I (i.e., for each program, the number of cycles and the first delay period $P_A$ for each cycle) in the ROM in the form of a command table. The program also includes a sub-routine, called "SUBROUTINE SEC", that provides for a delay in seconds equal to the number loaded.

| POGRAM STEP NUMBER | PROGRAM STEP |
|---|---|
| 0 | Start. Go to program step 1. |
| 1 | Set Pointer Register 1 to address of thumbwheel switch 77. Go to program step 2. |
| 2 | Set Pointer Register 2 to address of start of stack. Go to program step 3. |
| 3 | Load stack +4 with "6". Go to step 4. |
| 4 | Set Pointer Register 3 to address of SUBROUTINE SEC. Go to program step 5. |
| 5 | Go to program step 6. |
| 6 | Is "START" button (switch 81) depressed? NO - go to program step 5; YES - go to program step 7. |
| 7 | Run pump motor 41 for 90 seconds. Go to program step 8. |
| 8 | Go to program step 9. |
| 9 | Is "START" button (switch 81) depressed? NO - go to program step 8; YES - go to program step 10. |
| 10 | Read thumbwheel switch 77 address and the setting of sample size switch 78. Go to program step 11. |
| 11 | Store reading in stack +5. Go to program step 12. |
| 12 | Use reading to reset Pointer Register 1 to appropriate part of command table. Go to program step 13. |
| 13 | Go to program step 14. |
| 14 | Read value from command table and increase value of Pointer Register 1 by "1". Go to program step 15. |
| 15 | Is the value read equal to zero? YES - sound alarm; NO - go to program step 16. |

0018092

16    Store value read in stack +0. Go to program step 17.

17    Go to program step 18.

18    Load "60". Go to program step 19.

19    Call SUBROUTINE SEC. Go to program step 20.

20    Decrement stack +0 by "1". Go to program step 21.

21    Is value of stack +0 equal to zero? NO - go to program step 17; YES - go to program step 22.

22    Delay 30 seconds. Go to program step 23.

23    Run pump motor 41 for 60 seconds. Go to program step 24.

24    Load from stack +05. Go to program step 25.

25    Is value positive? YES - go to program step 26; NO - go to program step 28.

26    Operate arm motor 66 to move bracket 60 into position for discharge of large volume samples into cups 54. Go to program step 27.

27    Run pump motor 41 for 60 seconds. Go to program step 32.

28    Run pump motor 41 for 18 seconds. Go to program step 29.

29    Operate arm motor 66 to move bracket 60 into position for discharge of small-volume samples into cups 54. Go to program step 30.

30    Run pump motor 41 for 24 seconds. Go to program step 31.

31    Delay for 18 seconds. Go to program step 32.

32    Go to program step 33.

33    Operate arm motor 66 to move bracket 60 into position for discharge to waste. Go to program step 34.

34    Load from stack +4. Go to program step 35.

35    Load into stack +3. Go to program step 36.

36    Go to program step 37.

37    Operate turntable motor 74 to index turntable by one cup-location. Go to program step 38.

38    Decrement stack +3 by "1". Go to program step 39.

39    Is value equal to zero? NO - go to program step 36; YES - go to program step 40.

40      Load from stack +04. Go to program step 41.

41      Is value equal to "6"? NO - go to program step 43; YES - go to program step 42.

42      Delay 6 seconds. Go to program step 43.

43      Go to program step 44.

44      Read setting of indexing switch 80 ("6666" state or "6868" state), i.e. SENSE B of microprocessor chip SC/MP. Go to program step 45.

45      Is it high? NO - go to program step 13; YES - go to program step 46.

46      Change contents of stack +4 to "8" if "6" or to "6" if "8". Go to program step 13.

TABLE I
=========

| THUMBWHEEL SWITCH POSITION | SAMPLE TIMES: $T_{C1}$ | $T_{C2}$ | $T_{C3}$ | $T_{C4}$ | $T_{C5}$ |
|:---:|:---:|:---:|:---:|:---:|:---:|
| O | 5 mins | 10 mins | 15 mins | 20 mins | 30 mins |
| 1 | 5 mins | 15 mins | 30 mins | 45 mins | 1 HR |
| 2 | 10 mins | 20 mins | 30 mins | 40 mins | 1 HR |
| 3 | 10 mins | 20 mins | 40 mins | 1 HR | 2 HR |
| 4 | 10 mins | 30 mins | 1 HR | 1½ HR | 2 HR |
| 5 | ½ HR | 1 HR | 1½ HR | 2 HR | 3 HR |
| 6 | ½ HR | 1 HR | 2 HR | 3 HR | 4 HR |
| 7 | 10 mins | 20 mins | 30 mins | 1 HR | - |
| 8 | ½ HR | 1 HR | 1½ HR | 2 HR | - |
| 9 | ½ HR | 1 HR | 2 HR | 3 HR | - |

CLAIMS

1.    Apparatus for use in fluid sampling, said apparatus including:

(a)    sampling means comprising:

a carrier having a plurality of locations for open-topped containers in a regular array;

means to index the carrier in steps to present a predetermined number of said locations at a common charging station;

a bracket providing or supporting a plurality of conduit outlets in a corresponding array, each outlet being for discharge of an associated fluid sample and the number of said outlets being equal to said predetermined number of locations;

means to move the bracket between a first position, spaced above the carrier at said charging station, in which all said outlets can simultaneously discharge fluid from said conduits into respective carrier-supported open-topped containers at said common charging station and a second position in which all said outlets can simultaneously discharge fluid from said conduits into a waste receptacle;

(b)    pump means to effect fluid flow through said conduits simultaneously from a plurality of fluids to be sampled; and

(c)    control means to be operatively connected to said sampling means and said pump means for automatically effecting the following cycle or sequence of operations a predetermined number of times:

(i)    after a first predetermined time interval, actuating the pump means for a first predetermined time period with the bracket in said second position

(ii)    actuating the bracket moving means to move the bracket to said first position

(iii)    actuating the pump for a second predetermined time period to charge simultaneously, via said conduits, containers at the charging station with respective fluid samples, and

(iv) actuating the bracket moving means to move the bracket to said second position and, before after or simultaneously, actuating the indexing means to index the carrier by a predetermined number of said steps to present afresh said predetermined number of locations at the common charging station.

2. Apparatus according to Claim 1, wherein said bracket is pivotally mounted for arcuate movement by said bracket moving means about a horizontal pivot axis disposed above said carrier.

3. Apparatus according to Claim 1 or Claim 2, wherein said carrier comprises a turntable step-wise rotatable by said indexing means about a vertical axis, said container locations being equi-angularly spaced in an arcuate array centred on said vertical axis, and wherein said conduit outlets provided or supported by said bracket are equi-angularly spaced in an arcuate array of like radius of curvature to the first-mentioned arcuate array.

4. Apparatus according to any preceding Claim, wherein the control means comprises an indexing-steps setting device whereby the control means is selectively settable either to a first indexing condition in which said predetermined number of steps is the same for each repeated sequence of operations or to a second indexing condition in which said predetermined number of steps has a first value for each 2N-1 of said cycles and a second value for each 2N of said cycles, N being an integer.

5. Apparatus according to any preceding Claim, wherein the control means comprises a sample-size setting device to set the value of said first and second predetermined time periods.

6. Apparatus according to Claim 5, wherein said sample size setting device is one condition provides for equal first and second predetermined time periods in each cycle and in another condition provides for unequal first and second predetermined time periods in each cycle.

7.     Apparatus according to any preceding Claim, wherein the control means comprises a program selector device whereby the control means is settable to provide any one of a predetermined number of timing programs. each such timing program provided a specific combination of said first predetermined time interval and of said predetermined number of times that the cycle is performed.

8.     A method of dissolution testing pharmaceutical preparations in tablet or capsule form, wherein a plurality of such preparations are progressively dissolved in a corresponding number of solvent solutions, the solutions are simultaneously subjected to a sampling operation by apparatus according to any one of the preceding Claims, said operation is performed repeatedly at predetermined time intervals over a predetermined period of time, and wherein the open-topped containers containing the fluid samples are removed and the fluid samples therein subsequently analysed.

9.     Sampling means for apparatus according to any one of Claims 1 to 7, said sampling means being according to sub-oaragraph (a) of Claim 1.

10.     Control means for apparatus according to any one of Claims 1 to 7 said control means being according to sub-paragraph (c) of Claim 1.

FIG.1

FIG.2

FIG.3

4 7

FIG.4A

FIG. 4B

FIG.5

7/6

0018092

FIG.6

FIG.7

0018092

European Patent Office

**EUROPEAN SEARCH REPORT**

Application number

EP 80 30 0870.5

| Category | Citation of document with indication, where appropriate, of relevant passages | Relevant to claim |
|---|---|---|
| | **DOCUMENTS CONSIDERED TO·BE RELEVANT** | | |
| A | <u>DE - A1 - 2 630 543</u> (DYNATECH LABORA-TORIES) <br> * whole document * | |
| A | <u>DE - A1 - 2 540 969</u> (BODENSEEWERK PERKIN-ELMER) <br> * whole document * | |
| A | <u>DD - A - 83 660</u> (KÖHLER et al.) <br> * whole document * | |
| A | G.I.T. FACHZEITSCHRIFT FÜR DAS LABORA-TORIUM, Vol. 21, 1977 <br> Darmstadt <br> W. KREINBERG et al. "Der Mikropro-zessor-Prinzip, -Aufbau und Anwendung in der Labordatenverarbeitung" <br> pages 837 to 840 <br> * whole document * | |
| A | G.I.T. FACHZEITSCHRIFT FÜR DAS LABORA-TORIUM, Vol. 21, 1977, <br> Darmstadt <br> H.D. HELB et al. "Automatisierung mechanisierter Analysengeräte mit frei programmierbaren Miniprozeß-rechnern" <br> pages 848 to 850, 852 to 854, 857 to 859 <br> * whole document * | |

**CLASSIFICATION OF THE APPLICATION (Int. Cl.)**

G 01 N    1/00
G 01 N   35/00

**TECHNICAL FIELDS SEARCHED (Int.Cl.)**

G 01 N    1/00
G 01 N   35/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search | Date of completion of the search | Examiner |
| Berlin | 24-06-1980 | SCHWARTZ |

EPO Form 1503.1  06.78